# EUROPEAN PATENT SPECIFICATION

(11) **EP 2 977 177 B1**
(45) Date of publication and mention of the grant of the patent: **30.01.2019**
(21) Application number: 13878855.9
(22) Date of filing: 29.04.2013
(51) Int. Cl.: B29C 45/64, B29C 49/56, B29C 49/36, B29L 22/00

(54) **A SYSTEM WITH BILATERAL CLAMPING MECHANISM FOR BOTTOM DIE**
EIN SYSTEM MIT BILATERALER KLEMMVORRICHTUNG FÜR UNTERSTEMPEL
SYSTÈME AVEC MÉCANISME DE SERRAGE BILATÉRAL POUR MATRICE DE FOND

(30) Priority: 19.03.2013 CN 201310088018
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, 5701 KK Helmond (NL); YANG, Xinliang, Zhangjiagang Jiangsu 215624 (CN); YANG, Xiaying, Zhangjiagang Jiangsu 215624 (CN); HE, Deping, Zhangjiagang Jiangsu 215624 (CN)
(74) Representative: Jilderda, Anne Ayolt
(86) International application number: PCT/CN2013/075024
(87) International publication number: WO 2014/146333

(56) References cited:
- CN-A- 1 056 649
- CN-A- 103 171 132
- CN-A- 103 171 136
- CN-U- 201 755 911
- CN-U- 203 157 119
- CN-U- 203 157 124
- CN-Y- 201 325 179
- US-A1- 2006 093 699
- US-A1- 2012 306 127

## Description

The present invention relates to a system comprising a bottle blowing machine having a machine frame and a bottom mould, and a bilateral locking mechanism for a bottom mould, mounted on the bottle blowing machine. As such the present invention relates to the field of a processing device for a beverage bottle, and more particularly to a bilateral locking mechanism for a bottom mould of a bottle blowing machine.

A bottle blowing machine of the prior art generally comprises a machine frame, a left mould, a right mould and a bottom mould which are disposed on the machine frame, as well as a driving mechanism and a positioning mechanism. A bottom mould locking mechanism of a linear bottle blowing machine, as disclosed in patent publication No. CN201755911U, comprises a mould mounting plate, a bottle mould, a bottom mould, an actuating mechanism, a positioning mechanism and a supporting seat. The end of the cavity of the bottle mould is sleeved with the bottom mould which is connected with the actuating mechanism. The positioning mechanism is horizontally disposed on the support seat and comprises a positioning block air cylinder and a positioning block connected with each other. The actuating mechanism comprises a bottom mould mounting plate and a bottom mould elevating air cylinder. An upper surface of the bottom mould mounting plate is connected with the bottom mould, and a lower surface of the bottom mould mounting plate is connected with the bottom mould elevating air cylinder which is mounted on a support frame. From this, two driving mechanisms are required in the bottom mould locking mechanism of the above patent to drive the positioning mechanisms at two sides, this will increase the energy consumption and make the whole device bulky.

Further blow mould machines are known from US 2012/306127, US 2006/093699 and CN 201 325 179 respectively. These known blow moulding machines each comprise a set of mould halves that hinge around a common shaft for opening an closing the mould cavity.

A technical problem to be solved by the invention is to provide an improved bottom mould bilateral locking mechanism.

In order to overcome the above technical problem, a blow moulding system as described in the opening paragraph according to the invention is characterized by said the locking mechanism comprising a rotation shaft rotatable around a first axis; a power source for driving the rotation of the rotation shaft; a plurality of sliding blocks slidably disposed on the machine frame of the bottle blowing machine; multiple swing members swingably disposed on the machine frame, for driving the movement of the plurality of sliding blocks during it's swinging; and a rotation member fixedly disposed on the rotation shaft for driving the swinging of the multiple swing members; wherein when the locking mechanism is in a locked state, the plurality of sliding blocks are inserted between the bottom mould and the machine frame and contacts against the bottom mould, and wherein when the locking mechanism is in an unlocked state, the sliding blocks are detached from the bottom mould. A power source drives the rotation shaft to drive the rotation of the rotation member, such that the multiple swing members swing and drive the movement of the plurality of sliding blocks, the bottom mould is positioned at several points or released.

Preferably, the plurality of sliding blocks comprises a first sliding block and a second sliding block, a first guide rail and the second guide rail are provided on the machine frame, the first sliding block and a second sliding block respectively being slidable along the first guide rail and the second guide rail, the multiple swing members comprising a first swing member and a second swing member which respectively and correspondingly drive the sliding of the first sliding block and a second sliding block. The sliding of the two sliding blocks are separately controlled by the swinging of the two swinging members, this will simplify the controlling means of the locking mechanism.

More preferably, the rotation member has a first guiding surface and a second guiding surface on it's side surface, a first projection protruding towards the rotation member is formed on the first swing member and a second projection protruding towards the rotation member is formed on the second swing member, in the course of rotation of the rotation member relative to the machine frame, the first guiding surface slidably contacts with the first projection, and the second guiding surface slidably contacts with the second projection, and the distance between the contact position of the first guiding surface with the first projection and axis of rotation, and the distance between the contact position of the second guiding surface with the second projection and the axis of rotation respectively change with the rotation of the rotation member. The change in distance produces a guiding effect on the projection, such that the projection moves and the two swing members swing correspondingly.

More preferably, a first protrusion and a second protrusion respectively are formed on the first sliding block and a second sliding block, a first sliding groove is opened on the first swing member at a distance from the connection position of the first swing member with the machine frame, a second sliding groove is opened on the second swing member at a distance from the connection position of the second swing member with the machine frame, the first protrusion is slidably inserted into the first sliding groove and the second protrusion is slidably inserted into the second sliding groove. A transmission fork configuration is formed on each of the two swing members at a position where the sliding groove is opened, and the swing member controls the sliding of the sliding block by means of the transmission fork configuration.

More preferably, the first sliding block and the second sliding block respectively are located at the two opposite sides of the bottom mould. Two sliding blocks at two opposite sides of the bottom mould are utilized to achieve the bilateral positioning of the bottom mould, and this positioning is more reliable.

In a specific embodiment, an elastic member is arranged between each of the swing members and the machine frame for providing a restoring force for the swing member. In the course of rotation of the rotation member, when the contact position of the projection with the guiding surface gets farther and farther away from the first axis, the swing members are pushed by the rotation member to swing. Otherwise, in the course of rotation of the rotation member, when the contact position of the projection with the guiding surface becomes nearer and nearer to the first axis, , an external force is required to drive the swing member to swing, and the elastic member is used for providing such an external force. Certainly, the external force can be provided in other ways, for example, the swing member is driven by the rotation member.

Preferably, the bottom mould, the multiple swing members, the plurality of sliding blocks and the rotation member are located above an upper surface of the machine frame.

Due to the above technical solution, the present invention has the following advantages as compared with the prior art: in the invention, the plurality of sliding blocks can simultaneously position the bottom mould only utilizing a power source, this will make the positioning reliable, save the energy and reduce the volume of the whole device.
- Fig.1: is a top view of a bilateral locking mechanism in an unlocking state according to the invention (in the mould opening state);
- Fig.2: is another top view of the bilateral locking mechanism in a locking state according to the invention (in the mould closing state),
wherein: 2. a machine frame; 5. a rotation shaft; 7. a rotation member; 11. a bottom mould; 31. a first sliding block; 32. a second sliding block; 33. a first guide rail; 34. a second guide rail; 35. a first swing member; 351. a first torsional spring; 36. a second swing member; 361. a second torsional spring; 37. a first projection; 38. a second projection; 41. a first protrusion; 42. a first sliding groove; 51. a second protrusion; 52. a second sliding groove; 71. a first guiding surface; 72. a second guiding surface.

The present invention will be described hereinafter with reference to the accompanying drawings. It is to be noted, however, that the drawings are given only for illustrative purpose and therefore not to be considered as limiting of its scope, for the invention may admit to other equally effective embodiments.

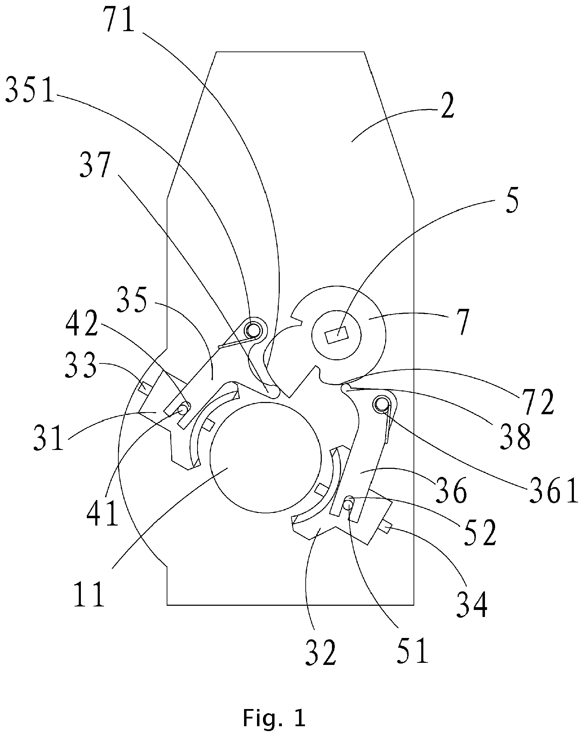

Figs. 1-2 illustrate a unilateral locking mechanism for a bottom mould of the invention, the locking mechanism is mounted on a bottle blowing machine. The other parts of the bottle blowing machine are not involved by the technical points of the invention and well known for one skilled in the art, and thus not shown in the figs.

The locking mechanism shown in the figures comprises a rotation shaft rotatable around it's own shaft axis, a rotation member fixedly disposed on the rotation shaft, multiple swing members cooperating with the rotation member, and a plurality of sliding blocks sliable relative to the machine frame 2. Each of the swing members is pivotably connected with the machine frame 2.. The rotation member 7 rotates under the driving of the rotation shaft, and drives the multiple swing members to swing relative to the machine frame 2, thereby controlling the sliding of the plurality of sliding blocks. The rotation shaft 5 is driven by a power source to rotate, and the power source is a commonly used device of the art, and thus not shown in the figures.

It is know that, a bottle blowing machine is provided with a blowing mould assembly comprising a left mould, a right mould and a bottom mould shown in the figures 1-2. when the blowing mould assembly is in the mould closing state, the left and right moulds close and the bottom mould 11 draw close to the left and right moulds, so that they enclose to form a cavity, in this case, the bottom mould 11 is needed to be positioned, and the locking mechanism of the invention is intended to position the bottom mould 11. In the mould closing state, the locking mechanism is in the locked state, and the plurality of sliding blocks are inserted between the bottom mould 11 and the machine frame 2 and contacts against the bottom mould 11.

Specifically, the sliding blocks comprise a first sliding block 31 and a second sliding block 32, the swing members comprise a first swing member 35 and a second swing member 36, the first sliding block 31 and the first swing member 35 constitute the first positioning unit, and the second sliding block 32 and the second swing member 36 constitute the second positioning unit. The first positioning unit and the second positioning unit respectively also comprise a first guide rail 33 and a second guide rail horizontally extending which are disposed on the machine frame 2. The first sliding block 31 and the second sliding block 32 respectively are slidable along the first guide rail 33 and the second guide rail 34. In the embodiment shown in figures 1-2, both the first guide rail 33 and the second guide rail 34 are linear guide rails.

A first guiding surface and a second guiding surface are provided on the rotation member 7, and a first projection 37 and a second projection 38 respectively are provided on the first swing member 35 and the second swing member 36. When the rotation member 7 rotates with the rotation shaft 5, the first projection 37 slides along the first guiding surface 71 and the second projection 38 slides along the second guiding surface 72.

The first guiding surface 71 can be configured as an evolvent-shaped structure as shown in figures 1-2. The distance between the outer edge of the cross-section of the guiding surface 71 along the line where the radius of the rotation shaft is and the shaft axis of the rotation shaft 5 becomes bigger and bigger or smaller and smaller clockwise. Certainly, the firs guiding surface 71 also can be configured as other curved configurations, for example, the second guiding surface 72 shown figures 1-2. The second guiding surface 72 shown in figures 1-2 is configured as heteromorphism curved surface having a "peak" and a "trough", or alternatively, the second guiding surface also can be designed with reference to the first guiding surface 71. The first guiding surface 71 and the second guiding surface 72 are designed such that the distances between the shaft axis of the rotation shaft 5 and the contact positions of the two projection with the two guiding surfaces respectively change with the rotation of the rotation member 7 thereby leading to the swinging of the swing member 35.

Preferably, a torsional spring 351 is arranged between the first swing member 35 and the machine frame 2 and a second torsional spring 361 is arranged between the second swing member 36 and the machine frame 2, and the two torsional springs respectively are used for providing a restoring force for the first swing member 35 and the second swing member 36. Referring to the conversion from fig.1 to fig.2, the rotation member 7 rotates anticlockwise, due to the guiding effects (from "peak" to "trough") of the first guiding surface 71 and the second guiding surface 72, the first projection 37 and the second projection 38 contacting with them move towards the shaft axis of the rotation shaft 5 (namely, the axis of rotation of the rotation shaft 5 relative to the machine frame 2), at this time, the first swing member 35 rotates anticlockwise under the acting force of the first torsional spring 351, the second swing member 36 rotates clockwise under the acting force of the second torsional spring 361, and the transmission forks of the two swing members drive the work sliding blocks to move along the guide rails to the position shown in fig.3, that is to say, the two sliding blocks are inserted between the bottom mould 1 and the machine frame 2 and contacts the bottom mould 1 to position the bottom mould 1.

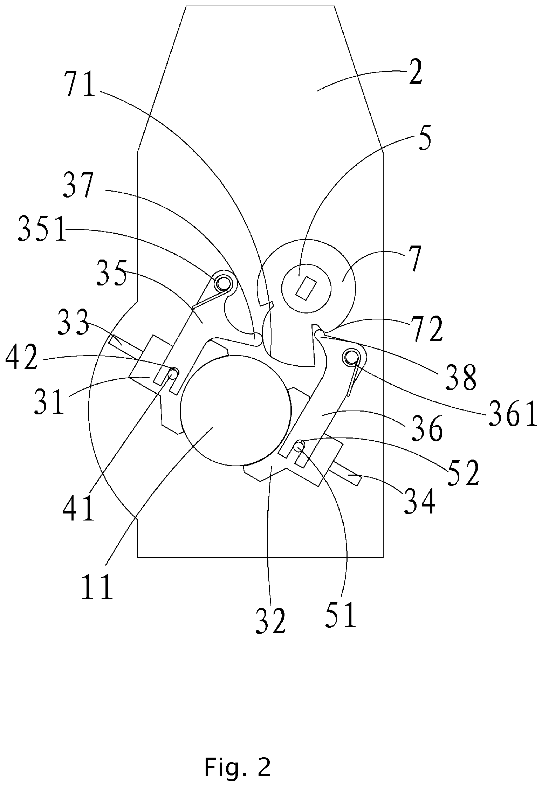

Again referring to the conversion from fig.2 to fig.1, the rotation member 7 rotates clockwise, the contact position of the first guiding surface 71 with the first projection 37 is farther and farther from the shaft axis of the rotation shaft 5, and the contact position of the second guiding surface 92 with the second projection 38 also becomes from "trough" to "peak", such that the two projections are pushed to move. In this course, the first swing member 35 overcomes the acting force of the torsional spring 351 to rotate clockwise and the second swing member 36 overcomes the acting force of the torsional spring 361 to rotate anticlockwise, and the two sliding blocks are driven by the two transmission forks to move to the position shown in fig.2, that is to say, the two sliding blocks are detached from the bottom mould 1 to release the bottom mould 1.

A first projection 41 is formed on the first sliding block 31 and a second projection 51 is formed on the second sliding block 32, a first sliding groove 42 is opened on the first swing member 35 at a distance from the connection position of the first swing member 35 with the machine frame 2, and a second sliding groove 52 is opened on the second swing member 36 at a distance from the connection position of the second swing member 36 with the machine frame 2, the first projection 41 is slidably inserted into the first sliding groove 42 and the second projection 51 is slidably inserted into the second sliding groove 52. The portions of the swing members where the sliding grooves are opened respectively form transmission forks for controlling the sliding of the two sliding blocks on the guide rail.

The first sliding block 31 and the second sliding block 32respectively are provided at the two opposite sides of the bottom mould, so that the bottom mould 11 can be positioned at the two side, thereby making the positioning more reliable.

The first positioning unit and the second positioning unit are located above the upper surface of the machine frame 2, and the components such as the rotation member 7 and the bottom mould 11 also are located above the upper surface of the machine frame 2.

When the mould blowing assembly is in the mould closing state, the bottom mould 11 rises relative to the machine frame 2 and is spaced apart from the machine frame 2, the sliding block 31 is inserted between the bottom mould 11 and the machine frame 2 and contacts against the bottom mould 11 below the bottom mould 1. When the bottom mould 1 is in the mould opening state, the power source drives the rotation shaft 5 to rotate, and the rotation shaft 5 brings the rotation of the rotation member 7, when the rotation member 7 rotates, the firs projection 37 slides along the firs guiding surface 71 and the second projection 38 slides along the second guiding surface 7, such that the swing member 35 and the second swing member 36 swing relative to the machine frame 2, thereby driving the first sliding block 31 and the second sliding block 32 to respectively slide along the first guide rail 33 and the second guide rail 34, then the locking mechanism is unlocked, and the bottom mould 11 can fall towards the machine frame 2.

## Claims

1. A system comprising:
- a bottle blowing machine having a machine frame and a bottom mould,
- a bilateral locking mechanism for a bottom mould, mounted on the bottle blowing machine,
**characterized in that** the locking mechanism comprises:
- a rotation shaft (5) rotatable around a first axis and a power source for driving the rotation of the rotation shaft (5);
- a plurality of sliding blocks (31, 32) slidably disposed (33, 34) on the machine frame (2) of the bottle blowing machine and multiple swing members (35, 36) swingably disposed on the machine frame (2), for driving the movement of the plurality of sliding blocks (31, 32) during it's swinging; and
- a rotation member (7) fixedly disposed on the rotation shaft (5) for driving the swinging of the multiple swing members (35, 36);
wherein when the locking mechanism is in a locked state, the plurality of sliding blocks are inserted between the bottom mould (11) and the machine frame (2) and contacts against the bottom mould (11), and
wherein when the locking mechanism is in an unlocked state, the sliding blocks are detached from the bottom mould (11).

2. The system as claimed in claim 1, wherein the plurality of sliding blocks comprises a first sliding block (31) and a second sliding block (32), a first guide rail (33) and the second guide rail (34) are provided on the machine frame (2), the first sliding block (31) and a second sliding block (32) respectively being slidable along the first guide rail (33) and the second guide rail (34), the multiple swing members comprising a first swing member (35) and a second swing member (36) which respectively and correspondingly drive the sliding of the first sliding block (31) and a second sliding block (32).

3. The system as claimed in claim 2, wherein the rotation member (7) has a first guiding surface (71) and a second guiding surface (72) on it's side surface, a first projection (37) protruding towards the rotation member (7) is formed on the first swing member (35) and a second projection (38) protruding towards the rotation member (7) is formed on the second swing member (36), in the course of rotation of the rotation member (7) relative to the machine frame, the first projection (37) (71) slidably contacting with the first guiding surface (71), the second projection (38) slidably contacting with the second guiding surface (72), the distance between the contact position of the first guiding surface (71) with the first projection (37) and the first axis and distance between the contact position of the second guiding surface (72) with the second projection (38) and the first axis respectively changing with the rotation of the rotation member (7).

4. The system as claimed in claim 2, wherein a first protrusion (41) and a second protrusion (51) respectively are formed on the first sliding block (31) and a second sliding block (32), and a first sliding groove (42) being opened on the first swing member (35) at a distance from the connection position of the first swing member (35) with the machine frame (2), a second sliding groove (52) being opened on the second swing member (36) at a distance from the connection position of the second swing member (36) with the machine frame (2), the first protrusion (41) being slidably inserted into the first sliding groove (42) and the second protrusion (51) being slidably inserted into the second sliding groove (52).

5. The system as claimed in claim 2, wherein the first sliding block (31) and the second sliding block (32) respectively are located at the two opposite sides of the bottom mould (1).

6. The system as claimed in any of the preceding claims, wherein an elastic member is arranged between each of the swing members and the machine frame (2) for providing a restoring force for the swing member.

7. The system as claimed in any of the preceding claims, wherein the bottom mould (11), the multiple swing members, the plurality of sliding blocks and the rotation member are located above an upper surface of the machine frame (2).

## Patentansprüche

1. Ein System umfassend:
- eine Flaschenblasmaschine, die einen Maschinenrahmen und eine Bodenform aufweist,
- einen bilateralen Verriegelungsmechanismus für eine Bodenform, montiert auf der Flaschenblasmaschine,
**dadurch gekennzeichnet, dass** der Verriegelungsmechanismus folgendes umfasst:
- eine Welle (5), die drehbar um eine erste Achse ist, und eine Leistungsquelle zum Drehantreiben der Welle (5);
- eine Vielzahl von Gleitblöcken (31, 32), die gleitbar (33, 34) auf dem Maschinenrahmen (2) der Flaschenblasmaschine angeordnet sind und mehrere Schwenkelemente 835, 36), die verschwenkbar auf dem Maschinenrahmen (2) angeordnet sind, zum Antreiben der Bewegung der Vielzahl von Gleitblöcken (31, 32) während deren Verschwenkung; und
- ein Drehelement (7) das starr an der Welle (5) angeordnet ist zum Antreiben des Verschwenkens der mehreren Schwenkelemente (35, 36);
wobei, wenn der Verriegelungsmechanismus in einem verriegelnden Zustand ist, die Vielzahl von Gleitblöcken zwischen der Bodenform (11) und dem Maschinenrahmen (2) eingefügt sind und die Bodenform (11) kontaktieren, und
wobei, wenn der Verriegelungsmechanismus in einem gelösten Zustand ist, die Gleitblöcke von der Bodenform (11) entfernt sind.

2. Das System, wie in Anspruch 1 beansprucht, wobei die Vielzahl von Gleitblöcken einen ersten Gleitblock (31) und einen zweiten Gleitblock (32) umfasst, ferner eine erste Führungsschiene (33) und eine zweite Führungsschiene (34) auf dem Maschinenrahmen (2) vorgesehen sind, wobei der erste Gleitblock (31) und ein zweiter Gleitblock (32) jeweils entlang der ersten Führungsschiene (33) und der zweiten Führungsschiene (34) verschiebbar sind, die mehreren Verschwenkelemente ein erstes Verschwenkelement (35) und ein zweites Verschwenkelement (36) umfassen, die jeweils und entsprechend das Verschieben des ersten Gleitblockes (31) und eines zweiten Gleitblockes (32) antreiben.

3. Das System, wie im Anspruch 2 beansprucht, wobei das Drehelement (7) eine erste Führungsoberfläche (71) und eine zweite Führungsoberfläche (72) auf seiner Seitenfläche aufweist, ein erster Vorsprung (37), der in Richtung des Drehelementes (7) vorsteht, auf dem ersten Verschwenkelement (35) ausgebildet ist und ein zweiter Vorsprung (38), der in Richtung des Drehelementes (7) vorsteht, auf dem zweiten Verschwenkelement (36) ausgebildet ist, wobei bei der Verdrehung des Drehelementes (7) relativ zu dem Maschinenrahmen der erste Vorsprung (37) (71) in einem Gleitkontakt mit der ersten Führungsoberfläche (71) steht, der zweite Vorsprung (38) in einem Gleitkontakt mit der zweiten Führungsoberfläche (72) steht, der Abstand zwischen der Kontaktposition der ersten Führungsoberfläche (71) mit dem ersten Vorsprung (37) und der ersten Achse und der Abstand zwischen der Kontaktposition der zweiten Führungsoberfläche (72) mit dem zweiten Vorsprung (38) und der ersten Achse jeweils sich mit der Drehung des Drehelementes (7) ändern.

4. Das System, wie in Anspruch 2 beansprucht, wobei ein erster Vorsprung (41) und ein zweiter Vorsprung (51) jeweils auf dem ersten Gleitblock (31) und einen zweiten Gleitblock (32) ausgebildet sind, und eine erste Gleitkerbe (42) auf dem ersten Verschwenkelement (35) mit einem Abstand von der Verbindungsposition des ersten Verschwenkelementes (35) mit dem Maschinenrahmen (2) geöffnet ist, eine zweite Gleitkerbe (52) auf dem zweiten Verschwenkelement (36) mit einem Abstand zu der Verbindungsposition des zweiten Verschwenkelementes (36) mit dem Maschinenrahmen (2) geöffnet ist, der erste Vorsprung (41) gleitbar in die erste Gleitkerbe (42) eingefügt ist und der zweite Vorsprung (51) gleitbar in die zweite Gleitkerbe (52) eingefügt ist.

5. Das System, wie in Anspruch 2 beansprucht, wobei der erste Gleitblock (31) und der zweite Gleitblock (32) jeweils auf den entgegengesetzten Seiten der Bodenform (1) positioniert sind.

6. Das System, wie in einem der vorhergehenden Ansprüche beansprucht, wobei ein elastisches Element zwischen jedem der Verschwenkelemente und dem Maschinenrahmen (2) angeordnet ist, zum Vorsehen einer Rückführkraft für das Verschwenkelement.

7. Das System, wie in einem der vorhergehenden Ansprüche beansprucht, wobei die Bodenform (11), die mehreren Verschwenkelemente, die Mehrzahl von Gleitblöcken und das Drehelement oberhalb einer oberen Oberfläche des Maschinenrahmens (2) positioniert sind.

## Revendications

1. Un système comprenant :
- une machine de soufflage de bouteilles possédant une cadre et un moule inférieur,
- un mécanisme de verrouillage bilatéral pour un moule inférieur, monté sur la machine de soufflage de bouteilles,
**se caractérisant en ce que** le mécanisme de verrouillage comprend :
- un arbre de rotation (5) pivotant autour d'un premier axe et une source d'alimentation permettant d'entraîner la rotation de l'arbre de rotation (5) ;
- une pluralité de blocs coulissants (31, 32) disposés de manière à pouvoir coulisser (33, 34) sur le cadre (2) de la machine de soufflage de bouteilles et de multiples éléments oscillants (35, 36) disposés de manière à pouvoir osciller sur le cadre de la machine (2), afin d'entraîner le mouvement de la pluralité de blocs coulissants (31, 32) pendant son oscillation ; et
- un élément de rotation (7) disposés de manière fixe sur l'arbre de rotation (5) afin d'entraîner l'oscillation des multiples éléments oscillants (35, 36) ;
dans lequel lorsque le mécanisme de verrouillage est en position de verrouillage, la pluralité de blocs coulissants sont insérés entre le moule inférieur (11) et le cadre de la machine (2) et fait contact avec le moule inférieur (11), et
dans lequel lorsque le mécanisme de verrouillage est en position déverrouillée, les blocs coulissants sont désolidarisés du moule inférieur (11).

2. Le système selon la revendication 1, dans lequel la pluralité des blocs coulissants comprend un premier bloc coulissant (31) et un second bloc coulissant (32), un premier rail de guidage (33) et le second rail de guidage (34) sont installés sur la cadre de la machine (2), le premier bloc coulissant (31) et un second bloc coulissant (32) pouvant coulisser respectivement le long du premier rail de guidage (33) et du second rail de guidage (34), les multiples éléments oscillants comprenant un premier éléments oscillant (35) et un second élément oscillant (36) qui entraînent respectivement et parallèlement le glissement du premier bloc coulissant (31) et d'un second bloc coulissant (32).

3. Le système selon la revendication 2, dans lequel l'élément de rotation (7) possède une première surface de guidage (71) et une seconde surface de guidage (72) sur sa surface latérale, une première projection (37) dépassant en direction de l'élément de rotation (7) étant formée sur le premier élément oscillant (35) et une seconde projection (38) dépassant en direction de l'élément de rotation (7) étant formée sur le second élément oscillant (36), pendant la rotation de l'élément de rotation (7) par rapport au cadre de la machine , la première projection (37) (71) faisant contact en coulissant avec la première surface de guidage (71), la second projection (38) faisant contact en coulissant avec la seconde surface de guidage (72), la distance entre la position de contact de la première surface de guidage (71) avec la première projection (37) et le premier axe et la distance entre la position de contact de la seconde surface de guidage (72) avec la seconde projection (38) et le premier axe changeant respectivement avec la rotation de l'élément de rotation (7).

4. Le système selon la revendication 2, dans lequel une première protubérance (41) et une seconde protubérance (51) sont respectivement formées sur le premier bloc coulissant (31) et un second bloc coulissant (32), et une première cavité de coulissage (42) étant ouverte sur le premier élément oscillant (35) à distance de la position de raccordement du premier élément oscillant (35) avec le cadre de la machine (2), une seconde cavité de coulissage (52) étant ouverte sur le second élément oscillant (36) à distance de la position de raccordement du second élément oscillant (36) avec le cadre de la machine (2), la première protubérance (41) étant insérée en coulissant dans la première cavité de coulissage (42) et la seconde protubérance (51) étant insérée en coulissant dans la seconde cavité de coulissage (52).

5. Le système selon la revendication 2, dans lequel le premier bloc coulissant (31) et le second bloc coulissant (32) sont respectivement situés sur les deux côtés opposés du moule inférieur (1).

6. Le système selon l'une quelconque des revendications précédentes, dans lequel un élément élastique est disposé entre chacun des éléments oscillants et le cadre de la machine (2) pour fournir une force de rétablissement à l'élément oscillant.

7. Le système selon l'une quelconque des revendications précédentes, dans lequel le moule inférieur (11), les multiples éléments oscillants, la pluralité de blocs coulissants et l'élément de rotation sont situés au-dessus d'une surface supérieure du cadre de la machine (2).
